# EUROPÄISCHE PATENTSCHRIFT

(11) **EP 0 997 680 B1**
(45) Veröffentlichungstag und Bekanntmachung des Hinweises auf die Patenterteilung: **19.10.2005**
(21) Anmeldenummer: 99115650.6
(22) Anmeldetag: 07.08.1999
(51) Int. Cl.: F16L 37/12

(54) **Befestigungsvorrichtung**
Fastening device
Dispositif de fixation

(30) Priorität: 30.10.1998 DE 29819377 U
(43) Veröffentlichungstag der Anmeldung: 03.05.2000
(73) Patentinhaber: FESTO AG & Co, 73734 Esslingen (DE)
(72) Erfinder: Wagner, Dietmar, 73230 Kirchheim/Teck (DE); Schneider, Heidemarie, 73235 Weilheim/Teck (DE)
(74) Vertreter: Abel, Martin

(56) Entgegenhaltungen:
- DE-A- 2 849 133
- DE-A- 19 511 479
- FR-A- 1 277 596
- FR-A- 2 738 877
- GB-A- 937 393
- US-A- 5 577 301
- DEPPERT; STOLL: 'Pneumatische Steuerungen', 1994, VOGEL, WÜRZBURG * Seite 38 - Seite 47 *

## Beschreibung

Die Erfindung eine Befestigungsvorrichtung zum Befestigen eines Zusatzteils an einem Hauptteil,
- mit einem an dem Hauptteil angeordneten oder festlegbaren Adapter, der einen zur Verbindung mit dem Hauptteil dienenden Sockel und einen an dem Sockel beabstandet zum Hauptteil angeordneten, seitlich über den Sockel überstehenden Halteflansch aufweist,
- mit einer an dem Zusatzteil angeordneten Aufnahmetasche, die eine hintere und eine dieser mit Abstand gegenüberliegende vordere Taschenwand aufweist, wobei die vordere Taschenwand mit einer zum Rand der Taschenöffnung hin offenen Aussparung versehen ist, so dass das Zusatzteil mit der Taschenöffnung voraus in eine Montage-Zwischenstellung auf den Adapter aufsteckbar ist, in der der Halteflansch mit wenigstens einem Teil seines Umfanges innerhalb der Aufnahmetasche zwischen den beiden Taschenwänden sitzt und der Sockel die Aussparung durchsetzt,
- und mit einem Klemmteil, das einen gabelartigen Klemmabschnitt aufweist, der sich zum Erhalt eines Montage-Endzustandes des Zusatzteils so positionieren lässt, dass er beidseits des Sockels vorbeigreift und dabei den Halteflansch in Richtung der hinteren Taschenwand drückt.

Eine Befestigungsvorrichtung zum Befestigen eines Zusatzteils an einem Hauptteil dieser Art ist aus der DE 28 49 133 A1 bekannt. Die DE 28 49 133 offenbart eine Anschlussvorrichtung für Druckleitungen, bei der ein steckerartiges Anschlussstück in eine hierfür vorgesehene Gehäuseöffnung eines Gehäuses einsteckbar ist. Das Anschlussstück besitzt einen Steckzapfen an dessen oberem Bereich eine umlaufende Nut ausgebildet ist, an die sich ein umlaufender Ansatz anschließt, der als Anschlag dient und die Einstecktiefe des Anschlussstücks in die Öffnung des Gehäuses vorgibt. Zur Arretierung des Anschlussstücks dient eine Grundplatte, die eine schienenförmige Aufnahme für einen als Riegel wirkenden, in der schienenförmigen Aufnahme hin und her beweglichen Schieber aufweist. Der Schieber seinerseits besitzt wenigstens eine schlüsselförmige Öffnung mit einem etwa kreisförmig ausgebildeten Abschnitt, dessen Öffnungsdurchmesser dem Durchmesser der Gehäuseöffnung entspricht und einem diesem gegenüber verengten Abschnitt.
Ist das Anschlussstück mit seinem Steckzapfen in die zugeordnete Gehäuseöffnung eingesteckt, so wird der Schieber aus der Stellung, in der sein durchmessergroßen Abschnitt mit der Gehäuseöffnung fluchtet, derart verschoben, dass der verengte Abschnitt mit seinen Rändern in die Nut tangential zum Zapfen eingreift, so dass das Anschlussstück arretiert ist und nicht wieder aus der Gehäuseöffnung herausgezogen werden kann. In der arretierten Stellung befindet sich der Ansatz am Steckzapfen in einer taschenartigen Aufnahme, die einerseits durch die Oberseite des Gehäuses und anderseits durch die Unterseite des Schiebers begrenzt wird, wobei die an den Anschlag angrenzende Nut den verengten Abschnitt am Schieber durchsetzt.

In zur Speisung von mit Druckluft betriebenen Geräten und Maschinen dienende Druckluftnetze werden in der Regel sogenannte Wartungsgeräte eingeschaltet, die zur sogenannten Aufbereitung, also zur Konditionierung der Druckluft dienen. Auf diese Weise wird die Druckluft beispielsweise gefiltert, mit Ölpartikeln versetzt oder auf einen gewünschten Arbeitsdruck reguliert. Der eingestellte Arbeitsdruck lässt sich an einem Manometer ablesen, das als Zusatzteil an einem beispielsweise als Filter-Regler-Gerät ausgeführten Wartungsgerät montiert ist. Zur Montage dient bisher eine Befestigungsvorrichtung, die an einem Manometer fest angeordneten Gewindestutzen enthält, der in eine am Wartungsgerät vorgesehene Gewindebohrung eingeschraubt wird, die mit dem zu messenden Druck beaufschlagt ist (vgl. Deppert/Stoll "Pneumatische Steuerungen", 10. Auflage 1994, Seite 38 bis 47).

Die Montage und Demontage der bekannten Manometer ist relativ umständlich und führt nicht selten zu unerwünschten Ausrichtungen des Manometers, die ein bequemes Ablesen der angezeigten Druckwerte verhindern. Die Drehstellung des Manometers hängt von der möglichen Einschraubtiefe des Gewindestutzens ab, die von Fall zu Fall variieren kann, so dass die im Montage-Endzustand vorliegende Ausrichtung meist eher zufällig ist. Von Nachteil ist ferner, dass bei einem beispielsweise defektbedingten Austausch des Manometers die Gewindeverbindung in umständlicher Weise gelöst werden muss, wobei nicht selten Beschädigungen an der Gewindepaarung auftreten, insbesondere wenn zuvor korrosive Materialangriffe aufgetreten sind. Unter Umständen wird dadurch das gesamte Wartungsgerät unbrauchbar.

Es ist die Aufgabe der vorliegenden Erfindung, eine Befestigungsvorrichtung zum Befestigen eines Zusatzteils an einem Hauptteil zu schaffen, die bei reduzierter Beschädigungsgefahr eine einfachere Handhabung ermöglicht.

Gelöst wird diese Aufgabe durch eine Befestigungsvorrichtung zum Befestigen eines Zusatzteils an einem Hauptteil mit den Merkmalen des unabhängigen Anspruchs 1.

Die erfindungsgemäße Befestigungsvorrichtung zeichnet sich dadurch aus, dass das Klemmteil als bezüglich der vorderen Taschenwand separates Bauteil ausgebildet ist, das sich zum Erhalt des Montage-Endzustandes so in der Aufnahmetasche positionieren lässt, dass es beidseits des Sockels zwischen dem Halteflansch und der am Zusatzteil vorgesehenen, vorderen Taschenwand eingreift.

Das Zusatzteil kann insbesondere von einem Mess- und/oder Anzeigegerät, beispielsweise einem Drucksensor bzw. einem Manometer, gebildet sein. Bei dem Hauptteil kann es sich insbesondere um eine fluidführende Einrichtung, beispielsweise ein zur Aufbereitung von Druckluft dienendes Wartungsgerät handeln.

Die Montage des Zusatzteils am Hauptteil erfolgt unter Zwischenschaltung eines Adapters, der unter Umständen fester Bestandteil des Hauptteils sein kann, zweckmäßigerweise aber als separates Bauteil ausgeführt ist. Die separate Ausgestaltung hat den Vorteil, daß nicht verschiedene Zusatzteile mit unterschiedlichen Anschlußgrößen produziert oder bevorratet werden müssen. Ein und dasselbe Zusatzteil kann somit problemlos an unterschiedliche Hauptteile angebaut werden, es ist lediglich ein anderer Adapter zu wählen, dessen Aufbau und Herstellung aber einfach ist. Er verfügt über einen beabstandet zum zugeordneten Hauptteil angeordneten Halteflansch, auf den sich das Zusatzteil mit seiner als Aufnahmetasche bezeichneten taschenähnlichen Vertiefung aufstecken läßt, bis entweder der Rand des Halteflansches oder die Umfangsfläche des Sockels am Zusatzteil anliegt und dadurch den Aufsteckweg begrenzt. In der dann vorliegenden Montage-Zwischenstellung läßt sich das Zusatzteil bei entsprechender Ausgestaltung des Adapters winkelmäßig in einer gewünschten Ausrichtung justieren, worauf durch Betätigung des Klemmteils der Montage-Endzustand hergestellt wird, bei dem das Zusatzteil fest an dem Adapter fixiert ist. Das Klemmteil greift mit seinem gabelartigen Klemmabschnitt auf einander diametral entgegengesetzten Seiten des Sockels zwischen den Halteflansch und den die Aussparung begrenzenden Bestandteil der vorderen Taschenwand, wobei der Halteflansch in Richtung der hinteren Taschenwand gedrückt wird und sich insgesamt eine feste Verklemmung ergibt. Allerdings kann bei Bedarf vorgesehen sein, die Klemmkraft so zu begrenzen, daß sich das Zusatzteil auch nach Einnahme des Montage-Endzustandes zumindest noch geringfügig relativ zum Adapter verdrehen und in gewünschter Weise ausrichten läßt.

Vorteilhafte Weiterbildungen der Erfindung gehen aus den Unteransprüchen hervor.

Der Adapter ist zweckmäßigerweise als Schraubteil ausgeführt, wobei der Sockel mit einem Außengewinde versehen sein kann, das sich in eine mit einem komplementären Innengewinde versehene Anschlußöffnung des Hauptteils einschrauben läßt. Das Außengewinde kann mit einem geeigneten Dichtmaterial beschichtet sein, um beim Einschrauben automatisch eine fluiddichte Verbindung zwischen Adapter und Schraubteil herzustellen. Ist ein Austausch des Zusatzteils erforderlich, kann dieses nach Entfernen des Klemmteils vom Adapter abgenommen werden, wobei der Adapter am Hauptteil verbleiben kann und somit die Dichtheit und Funktionalität der Gewindeverbindung nicht beeinträchtigt wird.

Zum Handhaben des Schraubteils beim Schraubvorgang ist zweckmäßigerweise von der Seite des Halteflansches her ein Innenmehrkant eingebracht, der das Ansetzen eines geeigneten Schraubwerkzeuges ermöglicht, ohne den Randbereich des Halteflansches erfassen zu müssen und eventuell zu beschädigen.

Soll durch das Zusatzteil die Zustandsgröße eines Fluides, insbesondere ein Fluiddruck, verarbeitet und/oder angezeigt werden, erfolgt die Fluidzufuhr zum Zusatzteil zweckmäßigerweise über einen den Adapter insbesondere koaxial durchsetzenden Durchgangskanal hinweg. Auf diese Weise hat der Adapter eine Mehrfachfunktion zum Halten des Zusatzteils und zum Führen des betreffenden Fluides.

Um eine dichte Fluidübertragung zwischen dem Adapter und dem Zusatzteil zu gewährleisten, ist im Übergangsbereich zweckmäßigerweise ein aus gummielastischem Material bestehender Dichtungsring plaziert, der vorzugsweise in einer Ringnut der hinteren Taschenwand des Zusatzteils und/oder des Adapters einsitzt. Der Dichtungsring kann nach Bedarf beliebige Formgebungen aufweisen, wobei auch andere Geometrien als eine Kreisgeometrie zum Einsatz gelangen können.

Eine optimale Verdrehbarkeit und dadurch variable Drehpositionierung des Zusatzteils bezüglich des Adapters ergibt sich, wenn der Halteflansch über einen kreisförmigen Außenumriß verfügt, der quasi eine Führung für die Drehbewegung bildet. In diesem Zusammenhang ist es von Vorteil, wenn die der Taschenöffnung gegenüberliegende, die vordere und die hintere Taschenwand verbindende seitliche Taschenwand über eine kreisbogenförmig konturierte Innenfläche verfügt, deren Krümmungsradius mit demjenigen des Außenumrisses des Halteflansches übereinstimmt, so daß sich eine optimale Flächenpaarung ergibt.

Der Adapter kann sich seitlich auch an der Begrenzungsfläche der Aussparung abstützen. Insbesondere in diesem Fall kann die Aufnahmetasche an der der Taschenöffnung gegenüberliegenden Seite auch vollständig offen sein.

Das Klemmteil kann schieberartig ausgeführt und im Rahmen einer Verschiebebewegung zwischen einer die Montage und Demontage des Zusatzteils ermöglichenden Freigabestellung und einer den Montage-Endzustand des Zusatzteils festlegenden Klemmstellung verbringbar sein. Es kann bei Bedarf so am Zusatzteil gelagert sein, daß es auch in der Freigabestellung unverlierbar fixiert ist. Möglich ist es aber auch, das Klemmteil als völlig eigenständiges Bauteil auszuführen, das in der Freigabestellung vom Zusatzteil entfernt ist und erst zum Erhalt der Klemmstellung am Zusatzteil angebracht wird.

Nachfolgend wird die Erfindung anhand der beiliegenden Zeichnung näher erläutert. In dieser zeigen:
- Fig. 1: eine vorteilhafte Ausgestaltung der erfindungsgemäßen Befestigungsvorrichtung in einer Phase des Befestigungsvorganges, bei dem das Zusatzteil noch nicht am Hauptteil fixiert ist, im Längsschnitt,
- Fig. 2: die Anordnung aus Fig. 1 nach erfolgter Montage, wobei das Zusatzteil den Montage-Endzustand einnimmt, das Ganze im Längsschnitt gemäß Schnittlinie II-II aus Fig. 3, und
- Fig. 3: die Anordnung aus Fig. 2 in einem Querschnitt gemäß Schnittlinie III-III.

In der Zeichnung ist schematisch ein Ausschnitt eines nachfolgend als Hauptteil 1 bezeichneten Wartungsgerätes dargestellt, das in Druckluftnetzen zur Aufbereitung der Druckluft eingesetzt wird. Es handelt sich im vorliegenden Fall um eine kombinierte Filter-Regler-Einheit, in der unter anderem der Druck der Druckluft von einem durch eine Druckquelle bereitgestellten Ausgangsdruck auf einen geringeren Arbeitsdruck eingeregelt wird. Die unter dem Arbeitsdruck stehende Druckluft steht unter anderem in einem ersten Fluidkanal 2 an, der über eine mit einem Innengewinde versehene Anschlußöffnung 3 zur Außenfläche des Gehäuses des Hauptteils 1 ausmündet.

In der Zeichnung ist ferner ein beispielhaft von einem Manometer gebildetes Zusatzteil 4 abgebildet. Das Manometer dient dazu, den im ersten Fluidkanal 2 herrschenden Arbeitsdruck zu erfassen bzw. zu messen und über eine Anzeigeeinrichtung 5 zur Anzeige zu bringen. Hierzu verfügt das Zusatzteil 4 über einen zweiten Fluidkanal 6, der im am Hauptteil 1 montierten Zustand mit dem ersten Fluidkanal 2 kommuniziert und den Arbeitsdruck einem nur schematisch angedeuteten Drucksensor 7 des Zusatzteils 4 zuleitet. Der Drucksensor 7 ist beim Ausführungsbeispiel Bestandteil einer im Gehäuse 8 des Zusatzteils 4 fixierten Leiterplatte 12, an die die beispielsweise mit LED- und/oder mit LCD-Anzeigemitteln ausgestattete Anzeigeeinrichtung 5 angeschlossen ist. An ihr lassen sich im vorliegenden Fall die Druckwerte des Arbeitsdruckes ablesen. Eine zusätzliche elektrische Anschlußeinrichtung 13 kann vorgesehen sein, um das Manometer mit einer externen Anzeige- und/oder Steuereinrichtung zu verbinden.

Die allgemein mit Bezugsziffer 14 bezeichnete Befestigungsvorrichtung eignet sich insbesondere zur Montage eines Meß- und/oder Anzeigegerätes an einer fluidführenden Einrichtung, beispielsweise an einem sogenannten Wartungsgerät. Es versteht sich allerdings, daß sie auch zur gegenseitigen Befestigung beliebiger anderer Teile eingesetzt werden kann.

Die Befestigungsvorrichtung 14 enthält ein nachfolgend vereinfacht nur als Adapter 15 bezeichnetes Adapterteil, das zweckmäßigerweise als bezüglich des Hauptteils 1 separates Teil ausgeführt ist und sich insbesondere lösbar am Hauptteil 1 festlegen läßt. Im Prinzip wäre auch eine einstückige Ausgestaltung mit dem Hauptteil 1 möglich, was allerdings zu Lasten der universellen Einsatzmöglichkeiten gehen würde, so daß die getrennte Ausführung bevorzugt wird.

Der Adapter 15 verfügt über einen stutzenartigen Sockel 16, an dessen einem axialen Endbereich einstückig ein Halteflansch 17 angeformt ist. Der Halteflansch 17 hat zweckmäßigerweise eine ringförmige Gestalt und ist koaxial zum Sockel 16 ausgerichtet, wobei er ringsum radial seitlich über den Sockel 16 übersteht. Auf der dem Sockel abgewandten Axialseite definiert er gemeinsam mit dem Sockel eine im wesentliche scheibenähnliche Anlagefläche 18, die axial orientiert ist.

Der Sockel 16 ist mit Verbindungsmitteln ausgestattet, die eine feste Verbindung mit dem Hauptteil 1 ermöglichen. Sie bestehen beim Ausführungsbeispiel aus einem Außengewinde 19, so daß der Adapter 15 insgesamt ein Schraubteil ist und sich mit seinem Sockel 16 in die Anschlußöffnung 3 des Hauptteils 1 fest einschrauben läßt.

Um die Schraubverbindung fluiddicht zu gestalten, ist der Sockel 16 im Bereich des Außengewindes 19 mit nicht näher dargestelltem Dichtmaterial beschichtet, das bei hergestellter Schraubverbindung zwischen den Gewindegängen dichtet.

Es sind ferner Maßnahmen getroffen, die dafür sorgen, daß der Halteflansch 17 im fest am Hauptteil 1 verankerten Zustand des Adapters 15 mit Abstand zum Hauptteil 1 bzw. der gegenüberliegenden Außenfläche dieses Hauptteils 1 angeordnet ist. Dies läßt sich beispielsweise durch geeignete Anschlagmittel realisieren oder vorzugsweise wie abgebildet dadurch, daß man auf konische Gewinde zurückgreift, die auch als Rohrgewinde bezeichnet werden und beispielsweise vom Typ NPT sein können. Hier wird die Einschraubtiefe durch ein Verspannen zwischen den in Eingriff stehenden beiderseitigen Gewindeabschnitten bewirkt.

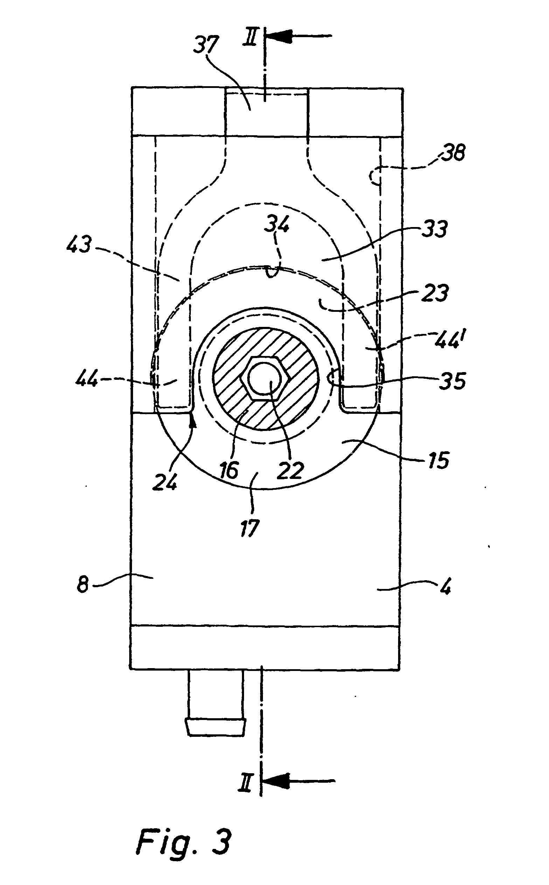

Wie aus Fig. 3 gut ersichtlich ist, verfügt der Halteflansch 17 über einen kreisförmigen Außenumriß. Um gleichwohl ein festes Einschrauben in die Anschlußöffnung 3 zu ermöglichen, ist in den Adapter 15 ausgehend von der Anlagefläche 18 konzentrisch eine Ausnehmung 22 eingebracht, die als Innenmehrkant konturiert ist und das Einstecken bzw. Ansetzen eines geeigneten Schraubwerkzeuges gestattet.

Das Zusatzteil 4 läßt sich so am Hauptteil 1 montieren, daß seine Rückseite dem Hauptteil 1 zugewandt ist. Im Bereich dieser Rückseite ist es mit einer zur Vereinfachung als Aufnahmetasche 23 bezeichneten taschenähnlichen Vertiefung versehen, deren Taschenöffnung 24 bei montiertem Zusatzteil 4 gesehen quer zur Längsachse 25 des Adapters 15 orientiert ist.

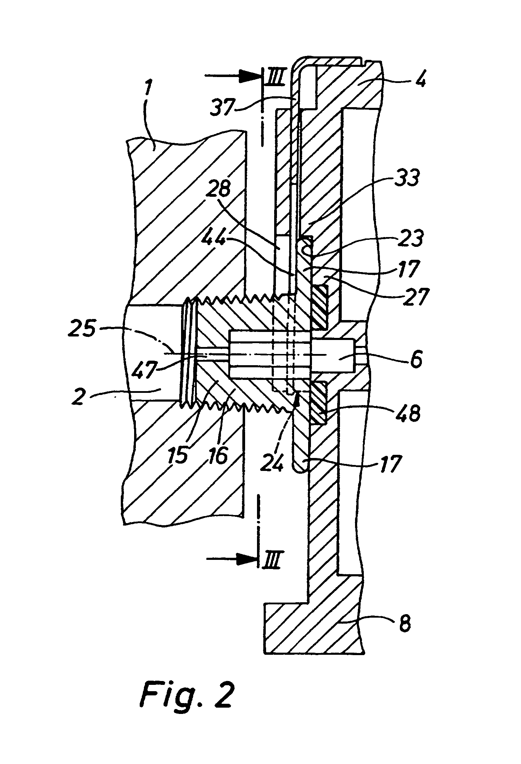

Die Fig. 2 zeigt das Zusatzteil 4 im fertig am Hauptteil 1 montierten Zustand, was nachfolgend als Montage-Endzustand bezeichnet sei. Erkennbar ist hier die Taschenöffnung 24 rechtwinkelig zu der Längsachse 25 des Adapters 15 bzw. dessen Sockels 16 ausgerichtet.

Die Aufnahmetasche 23 verfügt über eine von der Rückwand 26 des Zusatzteils 4 gebildete hintere Taschenwand 27 und eine dieser, im Montage-Endzustand gesehen, mit Abstand in Richtung zum Hauptteil 1 vorgelagerte vordere Taschenwand 28. Der Abstand zwischen diesen beiden Taschenwänden, der die Höhe h des Taschen-Innenraumes 32 definiert, wird durch die seitliche Taschenwand 33 vorgegeben, die die hintere und die vordere Taschenwand 27, 28 miteinander verbindet. Die dem Taschen-Innenraum 32 zugewandte Innenfläche 34 der seitlichen Taschenwand 33 ist zumindest in dem der Taschenöffnung 24 unmittelbar gegenüberliegenden Bereich kreisbogenförmig konturiert, wobei sie zur Taschenöffnung 24 hin auch mit linearem Verlauf auslaufen kann, so daß sich im Querschnitt gesehen ein zweckmäßigerweise U-förmiger Verlauf der an der seitlichen Taschenwand 33 vorgesehenen Innenfläche 34 ergibt.

Die Rückwand 26 ist über die Taschenöffnung 24 hinaus verlängert, wobei der der Taschenöffnung 24 vorgelagerte Bereich eine zweite Anlagefläche 18' bildet. Ferner ist die Höhe h der Taschenöffnung 24 etwas größer gewählt als die Dicke des Halteflansches 17.

Die vordere Taschenwand 28 verfügt über eine zum Rand der Taschenöffnung 24 hin offene Aussparung 35, die beim Ausführungsbeispiel kreisbogenförmig konturiert ist und einen Querschnitt aufweist, der ein wenigstens teilweises Einführen des Sockels 16 ermöglicht.

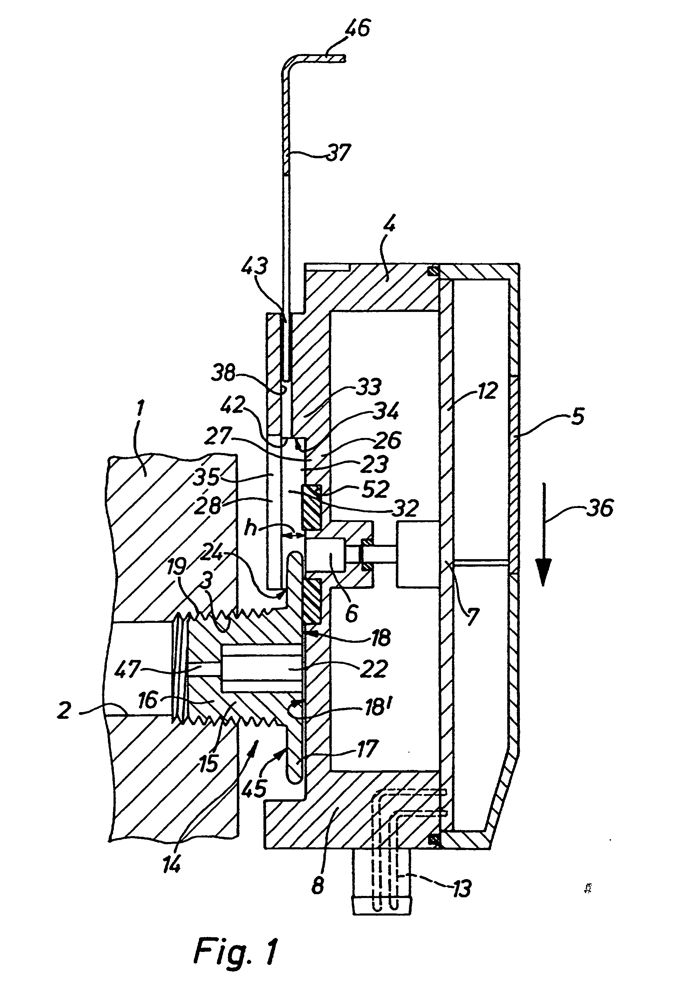

Um das Zusatzteil 4 zu montieren, wird es in einem ersten Montageschritt im Bereich der zweiten Anlagefläche 18' mit seiner Rückwand 26 an die am Adapter 15 vorgesehene erste Anlagefläche 18 im wesentlichen plan angelegt. Dieser Zustand ist in Fig. 1 gezeigt. Der Adapter 15 liegt dabei mit seinem Halteflansch 17 der Taschenöffnung 24 gegenüber.

Als nächstes wird das Zusatzteil 4 gemäß Pfeil 36 quer zur Längsachse 25 des Adapters 15 verschoben und dabei mit seiner Aufnahmetasche 23 auf den Halteflansch 17 aufgesteckt. Der Halteflansch 17 ragt jetzt gemäß Fig. 2 und 3 mit einem Teil seines Umfanges, beispielsgemäß mit etwas mehr als dem hälftigen Umfang, in den Taschen-Innenraum 32 hinein, wobei gleichzeitig der Sockel 16 in die Aussparung 35 eingreift und diese durchsetzt. Das Zusatzteil 4 ist jetzt praktisch an den Adapter 15 angehängt, wobei die entsprechende Stellung als Montage-Zwischenstellung bezeichnet sei.

Das Aufsteckmaß wird dadurch vorgegeben und begrenzt, daß der Halteflansch 17 mit seinem Rand an der Innenfläche 34 der seitlichen Taschenwand 33 der Aufnahmetasche 23 zur Anlage gelangt, wie dies aus Fig. 2 und 3 ersichtlich ist. Es besteht dann noch die vorteilhafte Möglichkeit, das Zusatzteil 4 relativ zum Adapter 15 bezüglich dessen Längsachse 25 zu verdrehen und winkelmäßig in die gewünschte Endposition auszurichten, wobei die vorgenannte Innenfläche 34 auf dem radial nach außen weisenden Rand des Halteflansches 17 entlanggleitet.

Zur endgültigen Befestigung des Zusatzteils 4 kommt schließlich noch ein Klemmteil 37 der Befestigungsvorrichtung 14 zum Einsatz. Dieses Klemmteil 37 ist beim Ausführungsbeispiel schieberähnlich ausgeführt und läßt sich von außen her in eine schlitzartige Durchbrechung 38 einstecken, die die seitliche Taschenwand 33 in dem der Taschenöffnung 24 gegenüberliegenden Bereich durchsetzt, und die zum einen zum Tascheninnenraum 32 und zum anderen zur Außenfläche des Gehäuses 8 des Zusatzteils 4 offen ist.

Die Ausdehnungsebene der schlitzartigen Durchbrechung 38 verläuft parallel zu derjenigen des Taschen-Innenraumes 32, wobei die dem Taschen-Innenraum 32 zugewandte Mündung 42 der Durchbrechung 38 zweckmäßigerweise unmittelbar neben der vorderen Taschenwand 28 vorgesehen ist.

Das Klemmteil 37 ist beim Ausführungsbeispiel als bezüglich des Zusatzteils 4 separates Bauteil ausgeführt und wird zweckmäßigerweise bei in Montage-Zwischenstellung befindlichem Zusatzteil 4 von außen her in die schlitzartige Durchbrechung 38 eingeführt und so weit eingesteckt, daß es in die Aufnahmetasche 23 hineinragt und mit einem am vorderen Endbereich vorgesehenen Klemmabschnitt 43 zwischen dem Halteflansch 17 und der vorderen Taschenwand 28 zu liegen kommt. Dabei gelangt das Klemmteil 37 in die aus Fig. 2 und 3 hervorgehende Klemmstellung, in der es sich zwischen dem Halteflansch 17 und der vorderen Taschenwand 28 abstützt und dabei gleichzeitig den Halteflansch 17 gegen die hintere Taschenwand drückt, so daß das Zusatzteil 4 fest mit dem Halteflansch 17 des Adapters 15 verspannt bzw. verklemmt ist. Die gewünschte Klemmkraft läßt sich dadurch beeinflussen, daß man die Dicke des Klemmabschnittes 43 und des Halteflansches 17 so aufeinander abstimmt, daß die Summe der Dickenabmessungen ein gewisses Maß größer ist als die Höhe h des Taschen-Innenraumes, so daß sich eine feste, kraftschlüssige Verbindung einstellt. Dabei kann gewährleistet sein, daß sich das Zusatzteil 4 auch im Montage-Endzustand noch zumindest geringfügig relativ zum Adapter 15 verdrehen läßt, um eine Feinjustierung der gewünschten Ausrichtung zu erhalten.

Um eine besonders gleichförmige Krafteinleitung zu erhalten, ist der Klemmabschnitt 43 gabelartig ausgeführt und verfügt über zwei mit Abstand parallel zueinander verlaufende Gabelarme 44, 44', die im Montage-Endzustand auf einander diametral entgegengesetzten Umfangsseiten des Sockels 16 zu liegen kommen und den Sockel praktisch reiterartig umgreifen. Man könnte auch von einer bügelartigen Ausgestaltung des Klemmabschnittes 43 sprechen. Die Gabelarme 44, 44' ragen dabei zwischen die der ersten Anlagefläche 18 entgegengesetzte Flanschfläche 45 und die die Aussparung 35 seitlich flankierenden Bereiche der vorderen Taschenwand 28.

Eine an dem dem Klemmabschnitt 43 entgegengesetzen Endabschnitt des Klemmteils 37 vorgesehene Betätigungspartie 46 erleichtert die Schiebebetätigung des Klemmteils 37 sowohl beim Hineindrücken in die Aufnahmetasche 23 als auch beim späteren Herausziehen, wenn das Zusatzteil 4 wieder abgenommen werden soll. Hierbei ist es besonders empfehlenswert, wenn die Betätigungspartie 46 abgewinkelt ist, so daß der Endabschnitt eine L-ähnliche Gestalt hat, wobei die Betätigungspartie 46 gleichzeitig auch als Anschlag dienen kann, die den Einsteckweg des Klemmteils 37 begrenzt, indem sie auf das Gehäuse 8 des Zusatzteils 4 aufläuft.

Bei montiertem Zusatzteil 4 wird durch den Adapter 15 hindurch eine Fluidverbindung zwischen den beiden Fluidkanälen 2, 6 hergestellt. Hierzu ist der Adapter 15 mit einem ihn insbesondere koaxial durchsetzenden Durchgangskanal 47 versehen, der einenends an der dem ersten Fluidkanal 2 zugewandten Stirnfläche des Sockels 16 mündet und andernends zur ersten Anlagefläche 18 offen ist. Dieser Öffnung liegt die Öffnung des zweiten Fluidkanals 6 gegenüber, so daß das Druckmedium aus dem ersten Fluidkanal 2 über den Durchgangskanal 47 hinweg in den zweiten Fluidkanal 6 des Zusatzteils 4 übertreten kann.

Um den Übergangsbereich zwischen dem Adapter 15 und dem Gehäuse 8 des Zusatzteils 4 abzudichten, ist der Mündungsbereich des zweiten Fluidkanals 6 konzentrisch von einem Dichtungsring 48 umschlossen, der zweckmäßigerweise in einer die an der Rückwand 26 liegende Mündung des zweiten Fluidkanals 6 umgebenden Ringnut 52 einsitzt, die in die Rückwand 26 eingelassen ist. Der Dichtungsring 48 hat zweckmäßigerweise, in Axialrichtung gesehen, eine kreisringförmige Geometrie, kann bei Bedarf aber auch eine andere Ringform haben, beispeilsweise oval oder mehreckig. Die Anordnung ist dabei zweckmäßigerweise so getroffen, daß der Dichtungsring 48 vor dem Anstecken des Zusatzteils 4 an den Adapter 15 geringfügig zum Taschen-Innenraum 32 hin über die hintere Taschenwand 27 vorsteht, so daß er nach dem Verklemmen der einzelnen Bestandteile durch den Adapter 15 fest mit der Rückwand 26 verpreßt wird, um einen guten Dichtkontakt herzustellen.

Somit wird der Halteflansch 17 durch das Klemmteil 37 unter Zwischenschaltung des Dichtungsringes 48 gegen die hintere Taschenwand 27 gedrückt, wobei der Halteflansch 17 zweckmäßigerweise keinen unmittelbaren Kontakt zur hinteren Taschenwand 27 hat, sondern die Abstützung nur über den zwischengeschalteten und elastisch verformten Dichtungsring 48 erfolgt. Der Dichtungsring 48 kann im übrigen anstelle in einer in der hinteren Taschenwand 27 vorgesehenen Ringnut 52 auch in einer im Adapter 15 an der der hinteren Taschenwand 27 zugewandten Seite vorgesehenen Ringnut einsitzen (nicht dargestellt).

Das Klemmteil 37 besteht insbesondere im Bereich des gabelartigen Klemmabschnittes 43 und vorzugsweise insgesamt aus Flachmaterial, beispielsweise aus Stahlblech.

Da die Klemmverbindung zwischen dem Zusatzteil 14 und dem Adapter 15 durch Herausziehen des Klemmteils 37 jederzeit leicht lösbar ist, gestaltet sich ein eventueller Austausch des Zusatzteils 4 sehr einfach, wobei insbesondere auch die dichte Gewindeverbindung zwischen dem Adapter 15 und dem Hauptteil 1 nicht beeinträchtigt wird.

In einer im Vergleich zum abgebildeten Ausführungsbeispiel leicht abgewandelten Bauform kann vorgesehen sein, daß die seitliche Taschenwand 33 in dem der Taschenöffnung 24 unmittelbar gegenüberliegenden Bereich mit einer sich über die gesamte Tascheninnenraum-Höhe "h" erstreckenden Durchbrechung versehen ist, so daß die Aufnahmetasche 23 in einer zur Aufsteckrichtung 36 parallelen Richtung durchgehend offen ist, wobei der Adapter 15 mit seinem Halteflansch 17 von der Seite der Taschenöffnung 24 her und das vorzugsweise schieberartige Klemmteil 37 durch die entgegengesetzte Durchbrechung 38 hindurch eingeführt werden kann. Da die Durchbrechung 38 in diesem Falle im Vergleich zu der beim Ausführungsbeispiel vorhandenen schmalen, schlitzartigen Öffnung eine größere Höhe hat, wird man in diesem Falle den die Durchbrechung 38 durchsetzenden Bereich des Klemmteils 37 ebenfalls entsprechend verdickt ausführen, damit eine Verschiebeführung erzielt wird. Die Verdickung kann beispielsweise dadurch vorgesehen werden, daß das Klemmteil 37 seitlich abgekantet wird und dadurch über laschenartige Führungsvorsprünge verfügt, mit denen es sich an der Wand der Durchbrechung 38 abstützen kann.

Da bei dieser Ausgestaltung im Tascheninnenraum 32 in der Regel keine gekrümmte Anlagefläche für den Umriß des Halteflansches 17 zur Verfügung steht, wird das Aufsteckmaß des Zusatzteils 4 zweckmäßigerweise dadurch begrenzt, daß die Aussparung mit ihrer gekrümmten Begrenzungsfläche seitlich am Außenumfang des Sockels 16 zur Anlage gelangt. Da dieser wie die Begrenzungsfläche der Aussparung 15 eine gekrümmte Außenkontur hat, ist im aufgesteckten Zustand des Zusatzteils 4 weiterhin eine Drehpositionierung bezüglich des Adapters 15 möglich.

## Patentansprüche

1. Befestigungsvorrichtung zum Befestigen eines Zusatzteils (4) an einem Hauptteil (1),
- mit einem an dem Hauptteil (1) angeordneten oder festlegbaren Adapter (15), der einen zur Verbindung mit dem Hauptteil (1) dienenden Sockel (16) und einen an dem Sockel (16) beabstandet zum Hauptteil (1) angeordneten, seitlich über den Sockel (16) überstehenden Halteflansch (17) aufweist,
- mit einer an dem Zusatzteil (4) angeordneten Aufnahmetasche (23), die eine hintere (27) und eine dieser mit Abstand gegenüberliegende vordere (28) Taschenwand aufweist, wobei die vordere Taschenwand (28) mit einer zum Rand der Taschenöffnung (24) hin offenen Aussparung (35) versehen ist, so dass das Zusatzteil (4) mit der Taschenöffnung (24) voraus in eine Montage-Zwischenstellung auf den Adapter (15) aufsteckbar ist, in der der Halteflansch (17) mit wenigstens einem Teil seines Umfanges innerhalb der Aufnahmetasche (23) zwischen den beiden Taschenwänden (27, 28) sitzt und der Sockel (16) die Aussparung (35) durchsetzt,
- und mit einem Klemmteil (37), das einen gabelartigen Klemmabschnitt (43) aufweist, der sich zum Erhalt eines Montage-Endzustandes des Zusatzteils (4) so positionieren lässt, dass er beidseits des Sockels vorbeigreift und dabei den Halteflansch (17) in Richtung der hinteren Taschenwand (27) drückt, **dadurch gekennzeichnet, dass**
- das Klemmteil (37) als bezüglich der vorderen Taschenwand (28) separates Bauteil ausgebildet ist, das sich zum Erhalt des Montage-Endzustandes so in der Aufnahmetasche (23) positionieren lässt, dass es beidseits des Sockels (16) zwischen dem Halteflansch (17) und der am Zusatzteil (4) vorgesehenen, vorderen Taschenwand (28) eingreift.

2. Befestigungsvorrichtung nach Anspruch 1, **dadurch gekennzeichnet, daß** der Adapter (15) als Schraubteil ausgeführt ist, das sich mit dem Hauptteil (1) verschrauben läßt.

3. Befestigungsvorrichtung nach Anspruch 2, **dadurch gekennzeichnet, daß** der Sockel (16) ein Außengewinde (19) trägt, das zweckmäßigerweise mit einem Dichtmaterial beschichtet ist, um eine abgedichtete Schraubverbindung mit dem Hauptteil (1) zu ermöglichen.

4. Befestigungsvorrichtung nach Anspruch 2 oder 3, **dadurch gekennzeichnet, daß** der Adapter (15) über eine mit einem Innenmehrkant versehene Ausnehmung (22) verfügt, die das Ansetzen eines Schraubwerkzeuges ermöglicht.

5. Befestigungsvorrichtung nach einem der Ansprüche 1 bis 4, **dadurch gekennzeichnet, daß** der Adapter (15) über einen Durchgangskanal (47) verfügt, der eine Fluidverbindung zwischen dem Hauptteil (1) und dem Zusatzteil (4) ermöglicht.

6. Befestigungsvorrichtung nach Anspruch 5, **dadurch gekennzeichnet, daß** der Durchgangskanal (47) an der vom Sockel (16) abgewandten Stirnfläche (18) des Adapters (15) ausmündet und bei montiertem Zusatzteil (4) mit einem in diesem vorgesehenen Fluidkanal (6) kommuniziert.

7. Befestigungsvorrichtung nach Anspruch 6, **dadurch gekennzeichnet, daß** ein bei montiertem Zusatzteil (4) zwischen dem Adapter (15) und der hinteren Taschenwand (27) liegender, zur Abdichtung des Übergangsbereiches zwischen dem Durchgangskanal (47) und dem Fluidkanal (6) dienender Dichtungsring (48) vorgesehen ist, über den sich der Halteflansch (17) zweckmäßigerweise an der hinteren Taschenwand (27) abstützt.

8. Befestigungsvorrichtung nach Anspruch 7, **dadurch gekennzeichnet, daß** der Dichtungsring (48) in einer die Mündung des Fluidkanals (6) des Zusatzteils (4) umgebenden Ringnut (52) des Zusatzteils (4) und/oder des Adapters (15) einsitzt.

9. Befestigungsvorrichtung nach einem der Ansprüche 1 bis 8, **dadurch gekennzeichnet, daß** der Halteflansch (17) über einen kreisförmigen Außenrumriß verfügt.

10. Befestigungsvorrichtung nach einem der Ansprüche 1 bis 9, **dadurch gekennzeichnet, daß** zumindest der der Taschenöffnung (24) gegenüberliegende Bereich der Innenfläche (34) der die hintere und die vordere Taschenwand (27, 28) verbindenden seitlichen Taschenwand (33) kreisbogenförmig und/oder U-ähnlich konturiert ist.

11. Befestigungsvorrichtung nach einem der Ansprüche 1 bis 9, **dadurch gekennzeichnet, daß** der der Taschenöffnung (24) gegenüberliegende Bereich der die hintere und die vordere Taschenwand (27, 28) verbindenden seitlichen Taschenwand (33) der Aufnahmetasche (23) offen ist.

12. Befestigungsvorrichtung nach einem der Ansprüche 1 bis 11, **dadurch gekennzeichnet, daß** das Zusatzteil (4) bei Einnahme der Montage-Zwischenstellung und insbesondere auch nach Vorliegen des Montage-Endzustandes relativ zum Adapter (15) bezüglich dessen Längsachse (25) verdrehbar und in unterschiedlichen Drehwinkelstellungen positionierbar ist.

13. Befestigungsvorrichtung nach einem der Ansprüche 1 bis 12, **dadurch gekennzeichnet, daß** das Klemmteil (37) schieberähnlich ausgebildet ist.

14. Befestigungsvorrichtung nach einem der Ansprüche 1 bis 13, **gekennzeichnet durch** eine der Taschenöffnung (24) gegenüberliegende, beispielsweise schlitzartige Durchbrechung (38), **durch** die hindurch das Klemmteil (37) in relativ zum Zusatzteil (4) verschieblicher Weise in die Aufnahmetasche (23) hineinragen kann.

15. Befestigungsvorrichtung nach Anspruch 14, **dadurch gekennzeichnet, daß** an dem auf der der Aufnahmetasche (23) entgegengesetzten Seite aus der Durchbrechung (38) herausragenden Endabschnitt des Klemmteils (37) eine insbesondere abgewinkelte Betätigungspartie (46) vorgesehen ist.

16. Befestigungsvorrichtung nach einem der Ansprüche 1 bis 15, **dadurch gekennzeichnet, daß** das Zusatzteil (4) von einem Meß- und/oder Anzeigegerät gebildet ist, insbesondere von einem Drucksensor oder Manometer.

17. Befestigungsvorrichtung nach einem der Ansprüche 1 bis 16, **dadurch gekennzeichnet, daß** das Hauptteil (1) von einer fluidführenden Einrichtung gebildet ist, insbesondere von einem zur Aufbereitung von Druckluft dienenden Wartungsgerät.

## Claims

1. Fastening arrangement for fastening a supplementary part (4) to a main part (1),
- having an adapter (15) arranged on or able to be fixed to the main part (1), which adapter (15) has a main body (16) acting as a connection to the main part (1), and a retaining flange (17) which is arranged on the main body (16) at a distance from the main part (1) and which projects beyond the main body (16) laterally,
- having a receiving pocket (23) arranged on the supplementary part (4), which receiving pocket (23) has a rear pocket-wall (27) and a front pocket-wall (28) which is situated opposite the latter at a distance therefrom, the front pocket-wall (28) being provided with a cut-out (35) which is open towards the edge of the opening (24) into the pocket, thus enabling the supplementary part (4) to be fitted onto the adapter (15), with the opening (24) into the pocket leading, to occupy an intermediate fitted position in which the retaining flange (17) is seated, by at least part of its circumference, within the receiving pocket (23) between the two pocket-walls (27, 28) and the main body (16) passes through the cut-out (35),
- and having a clamping part (37) which has a fork-like clamping portion (43) which, to enable the supplementary part (4) to be maintained in a fully fitted state, can be positioned in such a way that it fits past the main body on both sides and in so doing presses the retaining flange (17) in the direction of the rear pocket-wall (27), **characterised in that**
- the clamping part (37) is in the form of a component which is separate from the front pocket-wall (28) and which, to maintain the fully fitted state, can be positioned in the receiving pocket (23) in such a way that it engages, on both sides of the main body (16), between the retaining flange (17) and the front pocket-wall (28) provided on the supplementary part (4).

2. Fastening arrangement according to Claim 1, **characterised in that** the adapter (15) takes the form of a screwed part which can be screwed to the main part (1).

3. Fastening arrangement according to Claim 2, **characterised in that** the main body (16) carries an outside thread (19) which is usefully coated with a sealing material to make a sealed screwed connection possible to the main part (1).

4. Fastening arrangement according to Claim 2 or 3, **characterised in that** the adapter (15) has a recess (22) provided with an interior polygonal, which allows a screwing tool to be applied.

5. Fastening arrangement according to one of Claims 1 to 4, **characterised in that** the adapter (15) has a through-passage (47) which allows a connection to be made for fluid between the main part (1) and the supplementary part (4).

6. Fastening arrangement according to Claim 5, **characterised in that** the through-passage (47) opens onto that end-face (18) of the adapter (15) which is remote from the main body (16), and when the supplementary part (4) is fitted communicates with a passage (6) for fluid provided in the latter.

7. Fastening arrangement according to Claim 6, **characterised in that** a sealing ring (48) is provided which, when the supplementary part (4) is fitted, is situated between the adapter (15) and the rear pocket-wall (27), which serves to seal the region of the transition between the through-passage (47) and the passage (6) for fluid and by means of which the retaining flange (17) is usefully supported against the rear pocket-wall (27).

8. Fastening arrangement according to Claim 7, **characterised in that** the sealing ring (48) fits into an annular groove (52) in the supplementary part (4) and/or in the adapter (15), which annular groove (52) surrounds the mouth of the passage (6) for fluid in the supplementary part (4).

9. Fastening arrangement according to one of Claims 1 to 8, **characterised in that** the retaining flange (17) is circular in outline.

10. Fastening arrangement according to one of Claims 1 to 9, **characterised in that** at least that region of the inner face (34) of the lateral pocket-wall (33) connecting the rear and front pocket-walls (27, 28) which is situated opposite the opening (24) into the pocket is contoured in the shape of an arc of a circle and/or in a U-like shape.

11. Fastening arrangement according to one of Claims 1 to 9, **characterised in that that** region of the lateral pocket-wall (33) of the receiving pocket (23) connecting the rear and front pocket-walls (27, 28) which is situated opposite the opening (24) into the pocket is open.

12. Fastening arrangement according to one of Claims 1 to 11, **characterised in that**, when it assumes the intermediate fitted position, and in particular even after it is in the fully fitted state, the supplementary part (4) can be rotated relative to the adapter (15) on the latter's longitudinal axis (25) and is able to be positioned in different angular positions in rotation.

13. Fastening arrangement according to one of Claims 1 to 12, **characterised in that** the clamping part (37) is of a slider-like form.

14. Fastening arrangement according to one of Claims 1 to 13, **characterised by** a perforation (38) situated opposite the opening (24) into the pocket, which perforation (38) is for example slot-like and through which perforation (38) the clamping part (37) is able to project into the receiving pocket (23) in such a way as to be displaceable relative to the supplementary part (4).

15. Fastening arrangement according to Claim 14, **characterised in that** an actuating part (46), which is in particular angled, is provided on that end portion of the clamping part (37) which projects out of the perforation (38) on the opposite side from the receiving pocket (23).

16. Fastening arrangement according to one of Claims 1 to 15, **characterised in that** the supplementary part (4) is formed by a measuring and/or indicating device and in particular by a pressure sensor or pressure gauge.

17. Fastening arrangement according to one of Claims 1 to 16, **characterised in that** the main part is formed by a fluid-carrying means and in particular by a service unit used for the conditioning of compressed air.

## Revendications

1. Dispositif de fixation pour la fixation d'une pièce auxiliaire (4) sur une pièce principale (1),
- avec un adaptateur (15) disposé ou pouvant être fixé sur la pièce principale (1), comportant un socle (16) destiné à la liaison avec la pièce principale (1) et une bride de maintien (17) disposée sur le socle (16) à distance de la pièce principale (1), débordant latéralement du socle (16),
- avec une poche de réception (23) prévue sur la pièce auxiliaire (4), qui comporte une paroi postérieure de poche (27) et une paroi antérieure de poche (28) opposée à cette dernière à une certaine distance, la paroi antérieure de poche (28) étant pourvue d'un évidement (35) ouvert vers le bord de l'ouverture de la poche (24), pour que la pièce auxiliaire (4) puisse être enfichée d'abord dans une position intermédiaire de montage sur l'adaptateur (15) par l'ouverture de poche (24), dans laquelle la bride de maintien (17) est logée au moins par une partie de sa périphérie à l'intérieur de la poche de réception (23), entre les deux parois de poche (27, 28), et le socle (16) traversant l'évidement (35),
- et avec un élément de serrage (37) comportant un tronçon de serrage (43) fourchu, qui pour le maintien d'une position finale de montage de la pièce auxiliaire (4) se laisse positionner de façon à passer de part et d'autre du socle et à presser alors la bride de maintien (17) en direction de la paroi postérieure de poche (27), **caractérisé en ce que**
- l'élément de serrage (37) est conçu comme un élément séparé par rapport à la paroi antérieure de poche (28), qui pour le maintien de la position finale de montage se laisse positionner dans la poche de réception (23) de façon à s'accrocher des deux côtés du socle (16), entre la bride de maintien (17) et la paroi antérieure de poche (28) prévue sur la pièce auxiliaire (4).

2. Dispositif de fixation selon la revendication 1, **caractérisé en ce que** l'adaptateur (15) est réalisé sous la forme d'une pièce à visser, pouvant être vissée sur la pièce principale (1).

3. Dispositif de fixation selon la revendication 2, **caractérisé en ce que** le socle (16) comporte un filetage extérieur (19) qui est avantageusement revêtu d'une matière d'étanchéité, pour permettre un assemblage étanche par vis sur la pièce principale (1).

4. Dispositif de fixation selon la revendication 2 ou 3, **caractérisé en ce que** l'adaptateur (15) dispose d'un évidement (22) muni de pans creux qui permet de mettre en place un outil de vissage.

5. Dispositif de fixation selon l'une des revendications 1 à 4, **caractérisé en ce que** l'adaptateur (15) dispose d'un canal de passage (47) qui permet une liaison par fluide entre la pièce principale (1) et la pièce auxiliaire (4).

6. Dispositif de fixation selon la revendication 5, **caractérisé en ce que** le canal de passage (47) débouche sur la surface frontale (18) de l'adaptateur (15) qui est opposée au socle (16) et **en ce que** lorsque la pièce auxiliaire (4) est montée, il communique avec un canal à fluide (6) prévu dans cette dernière.

7. Dispositif de fixation selon la revendication 6, **caractérisé en ce qu'**est prévue une bague d'étanchéité (48) située entre l'adaptateur (15) et la paroi postérieure de poche (27) lorsque la pièce auxiliaire (4) est montée, pour assurer l'étanchéité de la zone de transition entre le canal de passage (47) et le canal à fluide (6), par l'intermédiaire de laquelle la bride de maintien (17) s'appuie avantageusement sur la paroi postérieure de poche (27).

8. Dispositif de fixation selon la revendication 7, **caractérisé en ce que** la bague d'étanchéité (48) est montée dans une rainure annulaire (52) de la pièce auxiliaire (4) et/ou de l'adaptateur (15) entourant l'embouchure du canal à fluide (6) de la pièce auxiliaire (4).

9. Dispositif de fixation selon l'une des revendications 1 à 8, **caractérisé en ce que** la bride de maintien (17) possède un contour extérieur circulaire.

10. Dispositif de fixation selon l'une des revendications 1 à 9, **caractérisé en ce qu'**au moins la zone de la surface intérieure (34) faisant face à l'ouverture de poche (24) de la paroi latérale de poche (33) reliant les parois postérieure et antérieure de poche (27, 28) a un contour circulaire et/ou analogue à un U.

11. Dispositif de fixation selon l'une des revendications 1 à 9, **caractérisé en ce que** la zone de la paroi latérale (33) de la poche de réception (23) reliant les parois postérieure et antérieure de poche (27, 28) faisant face à l'ouverture de poche (24) est ouverte.

12. Dispositif de fixation selon l'une des revendications 1 à 11, **caractérisé en ce que** lorsqu'elle adopte la position intermédiaire de montage et notamment également après atteinte de la position finale de montage, la pièce auxiliaire (4) est rotative par rapport à l'adaptateur (15), par rapport à l'axe longitudinal (25) de ce dernier et peut être positionnée dans différentes positions angulaires.

13. Dispositif de fixation selon l'une des revendications 1 à 12, **caractérisé en ce que** l'élément de serrage (37) est réalisé à la façon d'un coulisseau.

14. Dispositif de fixation selon l'une des revendications 1 à 13, **caractérisé par** un perçage (38) opposé à l'ouverture de poche (24) par exemple sous la forme d'une fente, à travers lequel l'élément de serrage (37) peut saillir dans la poche de réception (23), de façon coulissante par rapport à la pièce auxiliaire (4).

15. Dispositif de fixation selon la revendication 14, **caractérisé en ce que** sur le tronçon d'extrémité de l'élément de serrage (37) saillant hors du perçage (38) sur le côté opposé à la poche de réception (23), est prévue une partie d'actionnement (46) notamment coudée.

16. Dispositif de fixation selon l'une des revendications 1 à 15, **caractérisé en ce que** la pièce auxiliaire (4) est formée par un instrument de mesure et/ou d'affichage, notamment par un capteur de pression ou un manomètre.

17. Dispositif de fixation selon l'une des revendications 1 à 16, **caractérisé en ce que** la pièce principale (1) est formée par une unité conductrice de fluide, notamment par un appareil de maintenance destiné à mettre à disposition de l'air comprimé.
